(19) Europäisches Patentamt
European Patent Office
Office européen des brevets

(11) **EP 4 253 352 A1**

(12) **EUROPEAN PATENT APPLICATION**
published in accordance with Art. 153(4) EPC

(43) Date of publication:
**04.10.2023  Bulletin 2023/40**

(21) Application number: **21895978.1**

(22) Date of filing: **30.11.2021**

(51) International Patent Classification (IPC):
*C05G 5/35* (2020.01)      *C05G 5/12* (2020.01)
*C08L 97/00* (2006.01)      *C08L 29/00* (2006.01)

(52) Cooperative Patent Classification (CPC):
**C05G 5/12; C05G 5/35; C08L 29/00; C08L 97/00**

(86) International application number:
**PCT/BR2021/050528**

(87) International publication number:
**WO 2022/109706 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **30.11.2020  BR 102020024521**

(71) Applicants:
• **Suzano S.A.**
  **41810-012 Pituba, Salvador, BA (BR)**
• **Universidade Federal De Uberlândia - Ufu**
  **38400-902 Uberlândia MG (BR)**

(72) Inventors:
• **REIS, Miria Hespanhol Miranda**
  **38410-665 UBERLÂNDIA - MG (BR)**
• **HENRIQUE, Humberto Molinar**
  **38411-214 UBERLÂNDIA - MG (BR)**
• **DOS SANTOS, Antonio Carlos Silva**
  **57075-670 MACEIÓ - AL (BR)**
• **CARDOSO, Vicelma Luiz**
  **38411-229 UBERLÂNDIA - MG (BR)**

(74) Representative: **Aera A/S**
  **Niels Hemmingsens Gade 10, 5th Floor**
  **1153 Copenhagen K (DK)**

(54) **RELEASE CAPSULE, POLYMER SOLUTION, METHOD FOR PRODUCING CAPSULES, ENCAPSULATED UREA FOR USE IN CORRECTING SOIL, POLYMER MATERIAL FOR RELEASING A RELEASE COMPOUND, CONTROLLED-RELEASE POLYMER SYSTEM, METHOD OF CONTROLLED RELEASE, COMPOSITION FOR APPLICATION AND SOIL-REPAIRING AGENT**

(57)    The present invention relates to the field of controlled release systems of a substance in a medium, as well as embodiments by capsules using biodegradable polymers such as lignin and PVA.

**FIGURE 1**

EP 4 253 352 A1

**Description**

FIELD OF THE INVENTION

The present invention relates to the field of controlled release systems of a substance in a medium, as well as embodiments by capsules using biodegradable polymers such as lignin and PVA.

BACKGROUND OF THE INVENTION

A key aspect of successful use of an additive substance in a medium is the delivery of the substance in the right amount and at the right time for its performance. In order to minimize excessive release or immediate delivery, causing damage to the environment and waste of additive substance, and also the unnecessary costs entailed, and maximize the use of the additive substance, promoting its best overall performance, it is necessary to use resources to control the release of the substance, such as in field cultures, wherein this may mean placing the additive in vehicles forming particles or capsules.

Exemplarily, in controlled release (CRF) or slow-release fertilizers, a release substance may be urea. Due to its high solubility in water, excessive release of urea easily leads to excess nitrogen in the soil, which leads to fertilizer losses due to leaching or volatilization of nitrogen in nitric or ammoniacal form, respectively. Fertilizers are generally classified into two groups, namely natural organic products and synthetic chemicals. Urea belongs to the synthetic group of fertilizers. Since urea is very water-soluble, the most common method to achieve controlled fertilizer release is to control the solubility of the fertilizer itself. In this case, slow-release products are usually produced by reacting the urea with various aldehydes to reduce the solution capacity of the material. For example, isobutylidene diurea (IBDU) is a condensation product of urea and isobutyraldehyde. It contains about 31 % nitrogen, of which 90 % is insoluble in water. Urea can also react with formaldehyde, resulting in methylene urea polymers, varying in the length of the polymer chain and the degree of crosslinking of the molecular structure. Nitrogen is released from the insoluble portion of these materials by microbial degradation.

Another method of regulating the release of a release substance is the application of a coating. Various release mechanisms are possible depending on the type of coating applied. When a hydrophobic coating without pores is used, the release occurs only after partial degradation of the coating such as, for example, by microorganisms. Water-soluble coatings usually slow the release of the release substance. After a certain absorption of water, the coating becomes porous or even ruptures and then the release of the release substance occurs. The controlled-release or slow-release coatings must, on the one hand, be sufficiently hydrophilic to absorb water and thus enable transport of the release substance and, on the other hand, be sufficiently hydrophobic to prevent rupture of the wall of the coating. When damage occurs to a controlled-release coating, the product loses its controlled-release properties in whole or in part, since coating holes, cracks or fine points allow quick access to the water to which the release substance accesses.

Art discloses means of controlled release. Li et al. (LI, Jiebing et al. Structural functionalization of industrial softwood kraft lignin for simple dip-coating of urea as highly efficient nitrogen fertilizer. Industrial crops and products, v. 109, p. 255-265, 2017.) disclose a coating using polylactic acid (PLA) mixed with industrial softwood lignin and application by immersion coating technique.

Mulder et al. (MULDER, W. J. et al. Lignin based controlled release coatings. Industrial Crops and Products, v. 34, n. 1, p. 915-920, 2011.) disclose slow-release coatings by the application of lignins, such as lignosulfonates, Kraft lignin and others.

The art does not solve the previous problem of encapsulating a release substance using biodegradable polymers that provide an encapsulation of active ingredients of high solubility and controlled release over a desired period.

BRIEF DESCRIPTION OF THE INVENTION

The present invention relates to controlled release methods based on capsules obtained from compositions comprising polymeric solutions, as well as the use of release capsules and the application of controlled release methods.

It is a first objective of the invention to provide a release capsule comprising a capsule interior and a capsule wall encapsulating the interior comprising a release substance, the capsule wall comprising 20-50% lignin and 50-80% PVA, on a mass basis. The capsule, object of the present invention, may further optionally comprise other polymers, such as thermoplastics, which may form a blend with the lignin, preferably having from 20-25 % lignin; from 75-80 % PVA, on a mass basis.

It is a second objective of the invention to provide method of producing capsules comprising:

(a) provide 20-50 % lignin and 50-80 % PVA by total mass of the mixture;

(b) mixing the lignin and PVA, obtaining a polymeric mixture;

(c) adding and mixing a diluent agent to the polymeric mixture, in the mass ratio of 1:5 to 1:15, providing a polymeric solution;

(d) adding and mixing at least one release substance to the polymeric solution obtaining an encapsulating mixture comprising a mass ratio from 1 to 30%, preferably at least 10% on a mass basis of polymeric solution to the one or more release substances;

(e) adding a dispersant to the encapsulant mixture in the mass ratio of 1:5 to 1:15, obtaining capsules comprising a capsule core and capsule wall formed by the combination of lignin and PVA, and

(f) curing the encapsulating mixture to obtain a capsule.

It is a second objective of the invention to provide an encapsulated urea for use in soil correction comprising a core comprising an urea, and a capsule wall comprising lignin and PVA.
It is a third objective of the present invention to provide a polymeric material for release of a release compound.
It is a fourth objective of the present invention to provide controlled release polymeric system of a release substance in a medium.
It is a fifth objective of the invention to provide an application polymeric composition comprising an encapsulated urea and at least one soil repairing agent.
It is a sixth objective of the invention to provide a capsule for a controlled release method of a release substance in a culture medium.

## BRIEF DESCRIPTION OF THE FIGURES

The figure 1 illustrates Fourier transform infrared (FTIR) spectra for lignin, PVA, and PVA-lignin mixture samples.

The figure 2 illustrates Scanning Electron Microscopy (SEM) image of the outer surface of (a) uncoated urea granules.

The figure 3 illustrates Scanning Electron Microscopy (SEM) image of the urea outer surface with 10% by mass lignin coverage.

The figure 4 illustrates Scanning Electron Microscopy (SEM) image of the urea outer surface with 10% by mass PVA coverage.

The figure 5 illustrates Scanning Electron Microscopy (SEM) image of the urea outer surface with 10% by mass blending coverage with 25% by mass of lignin and 75% by mass of PVA (25L75P).

The figure 6 illustrates Scanning Electron Microscopy (SEM) image of the outer surface of urea granules with 10% by mass blending coverage with 50% by mass of lignin and 50% by mass of PVA (50L50P).

The figure 7 illustrates Scanning Electron Microscopy (SEM) image of the outer surface of urea granules with 10% by mass blending covering with 75% by mass of lignin and 25% by mass of PVA (75L25P).

The figure 8 illustrates Scanning Electron Microscopy (SEM) image of uncoated urea bead cross section.

The figure 9 illustrates Scanning Electron Microscopy (SEM) image of the cross-section of lignin-coated urea granules.

The figure 10 illustrates Scanning Electron Microscopy (SEM) image of the cross-section of PVA-coated urea granules.

The figure 11 illustrates Scanning Electron Microscopy (SEM) image of cross-section of urea granules coated by mixture with 25% by mass of lignin and 75% by mass of PVA (25L75P).

The figure 12 illustrates Scanning Electron Microscopy (SEM) image of the cross-section of urea granules coated by mixture with 50% by mass of lignin and 50% by mass of PVA (50L50P).

The figure 13 illustrates Scanning Electron Microscopy (SEM) image of cross-section of urea granules coated by mixture with 25 %by mass of lignin and 75% by mass of PVA (25L75P).

The figure 14 is a graph demonstrating the kinetic curve of the effect of different capsule wall thicknesses on nitrogen release from lignin-coated urea sample, with experimental data and adjusted to Higuchi's model.

The figure 15 is a graph demonstrating the kinetic curve of the effect of different polymeric wall thicknesses on nitrogen release from PVA-coated urea sample (experimental data and adjusted to Higuchi's model).

The figure 16 is a graph demonstrating the kinetic curve of the effect of different capsule wall thicknesses on nitrogen release of urea sample coated with 20L80P blend with experimental data and adjusted to Higuchi's model.

The figure 17 is a graph demonstrating the kinetic curve of the effect of different capsule wall thicknesses on nitrogen release of urea sample coated with 25L75P blend with experimental data and adjusted to Higuchi's model.

The figure 18 is a graph demonstrating the kinetic curve of the effect of different capsule wall thicknesses on nitrogen release of urea sample coated with 30L70P blend with experimental data and adjusted to Higuchi's model.

The figure 19 is a graph demonstrating the kinetic curve of the effect of different capsule wall thicknesses on nitrogen release from urea sample coated with 50L50P blend with experimental data and fitted to Higuchi's model.

The figure 20 is a graph demonstrating the kinetic curve of the effect of different capsule wall thicknesses on nitrogen release from urea sample coated with the 75L25P blend with experimental data and fitted to Higuchi's model.

The figure 21 shows the Differential Exploratory Calorimetry curves of the lignin, PVA and Blends 25L75P, 50L50P and 75L25P samples.

The figure 22 shows the tensile results of the PVA and Blends 25L75P and 50L50P samples.

## DETAILED DESCRIPTION OF THE INVENTION

The present invention relates to controlled release methods based on capsules obtained in compositions comprising polymeric solutions for use in release capsules and the application of controlled release methods.

The release capsule, object of the present invention, comprises a capsule interior and a capsule wall encapsulating the interior, the latter comprising at least one release substance, or more release substances, and the capsule wall comprising 20-50% lignin and 50-80% PVA, wherein PVA is a common name for polyacetate vinyl or polyvinyl acetate on a mass basis. The capsule, object of the present invention, may further comprise other polymers, such as thermoplastics, which may form a blend with the lignin. Preferably, the capsule, object of the present invention, comprises 20-25 % lignin and 75-80 % PVA, on a mass basis.

Lignin is one of the most abundant renewable materials and only a small part of the total quantity available is being exploited, mainly in the pulp and paper industry. Based on its interesting functional properties, lignin has good potential for various applications. Lignin is amorphous and compared to other biopolymers. The film-forming properties make lignin an interesting group of materials for the development of slow-release coatings for release substances.

Lignin can be obtained by a series of processes, from various plants or biomass. Among them, the most notable are alkaline pulping process, sulfite pulping process, milling process in ball mill, enzymatic release process, extraction with organic solvents and steam explosion process. Lignins are readily available biocompatible plant-based materials that are relatively inexpensive.

The release capsule according to the present invention comprises an average thickness of at least 50 $\mu$m. Such configuration is achieved by the mass ratio of at least 10% polymer solution with respect to the material to be coated.

Preferably, the release substance is a fertilizing material. Examples include nitrogen fertilizers such as urea, ammonium sulfate, ammonium nitrate, calcium nitrate, ammonium sulfonitrate, urea-ammonium sulfate; phosphate fertilizers such as diammonium phosphate (DAP), monoammonium phosphate (MAP), triple superphosphate (STG), triple ammonium superphosphate, single superphosphate (SSP), double superphosphate, single ammonium superphosphate, partially acidulated phosphate, ammonium phosphosulfate, magnesium thermophosphate, magnesium potassium thermophosphate, thermosuperphosphate; potassium fertilizers such as potassium sulfate, potassium chloride, potassium nitrate, potassium citrate, potassium carbonate, double sodium and potassium nitrate, potassium hydroxide, potassium and magnesium sulfate; calcium chloride, magnesium chloride, boric acid, zinc sulfate, copper sulfate, manganese sulfate, cobalt sulfate, organic fertilizers; organo-mineral fertilizers, or mixtures thereof.

The release capsule, object of the present invention, is obtained by curing a polymeric solution comprising, by total mass of the mixture, 20-50% lignin and 50-80% PVA, on a mass basis, which will be diluted in a diluent agent. The diluent agent is in a mass ratio of 1:5 to 1:15 of the polymeric mixture. Preferably, the diluent agent is in a mass ratio of 1:8 of the polymeric mixture.

Curing can take place by, for example, drying at room temperature, at approximately 25°C for 3 h for each cubic meter.

The present invention also provides a method of producing capsules comprising:

(a) providing 20-50% lignin and 50-80% PVA by total mass of the mixture;

(b) mixing the lignin and PVA, obtaining a polymeric mixture;

(c) adding and mixing a diluent agent to the polymeric mixture, in the mass ratio of 1:5 to 1:15, providing a polymeric solution;

(d) adding and mixing the one or more release substances to the polymeric solution obtaining an encapsulating mixture comprising a mass ratio from 1 to 30%, preferably at least 10%, on a mass basis, of polymeric solution to the release substance(s);

(e) adding a dispersant to the encapsulating mixture in the mass ratio of 1:5 to 1:15, obtaining capsules comprising a capsule core and capsule wall formed by the combination of lignin and PVA, and

(f) curing the encapsulating mixture to obtain a capsule.

The dispersant may be talc, limestone, kaolin, sulfur powder, dolomite, powdered micronutrient oxides, among others. Preferably, the dispersant is lignin.

The method of producing capsules, also object of the present invention, preferably presents in step (a) providing 20-25% lignin and 75-80% PVA, by total mass of the mixture.

Still further, the method preferably presents, in step (c), adding and mixing the diluent agent to the polymeric mixture in the mass ratio of 1:8, to provide a preferred polymeric solution.

The method preferably presents, in step (d) adding and mixing release substance(s) to the polymeric solution to an encapsulating mixture comprising a mass ratio of 1 to 30%, preferably of 10% of polymeric solution to the release substance(s).

The method of producing capsules, object of the present invention, preferably presents, in step (e) adding a dispersant to the encapsulating mixture in the preferred mass ratio of 1:10, for obtaining capsules comprising a capsule core and capsule wall formed by the combination of lignin and PVA.

The diluent agent may be methanol, dimethyl sulfoxide (DMSO), acetamide, glycols, dimethylformamide (DMF) and acetone, preferably acetone or methanol.

For example, several polymeric solutions have been prepared. Lignin was dissolved in acetone at a mass ratio of 1:10. A PVA solution was obtained by diluting PVA in methanol in the mass ratio of 1:8.

Also, powder mixtures were prepared varying the mass ratio of lignin and PVA, as shown in Table 1.

Table 1. Powder mixtures of lignin and PVA:

| Percentage mass of lignin (%) | Percentage mass of PVA (%) | Identification |
|---|---|---|
| 20 | 80 | 20L80P |
| 25 | 75 | 25L75P |
| 30 | 70 | 30L70P |
| 50 | 50 | 50L50P |
| 75 | 25 | 75L25P |

Such mixtures were diluted in methanol in the mass ratio of 1:8.

All polymeric solutions were prepared under stirring (approximately 100 rpm) and at room temperature (approximately 25°C) for approximately 3 h for proper homogenization.

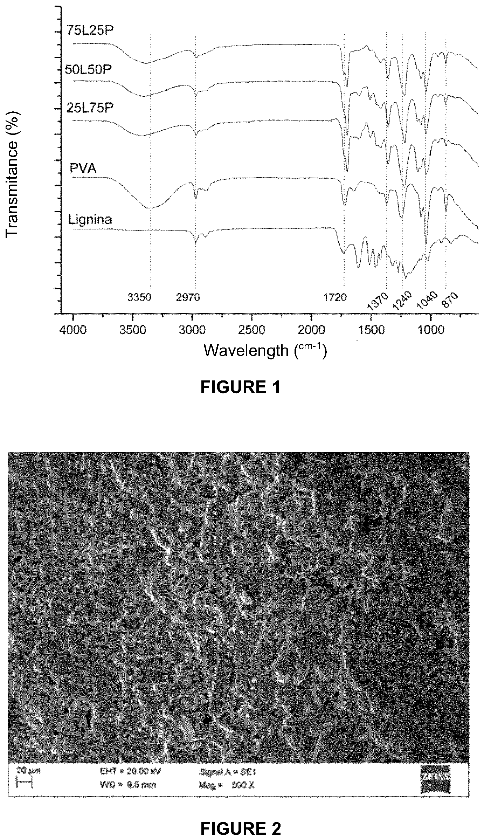

Figure 1 illustrates Fourier transform infrared (FTIR) spectra for lignin, PVA and PVA mixtures with lignin obtained from a Fourier transform infrared spectrophotometer (FTIR, Perkin Elmer, Spectrum two) coupled to a total reflection attenuator (ATR) in the frequency range of 4000 to 400cm$^{-1}$ with a resolution of 4cm-1

The lignin sample (Figure 1) presents an intense peak close to 1100cm$^{-1}$, relative to the secondary alcoholic groups. The peaks at 1210, 1450, 1520, and 1,600cm$^{-1}$ that are related to the aromatic structural vibrations of C=C and C-C. The bands from 2,800 to 3,000cm$^{-1}$ can be assigned to C-H of the methyl and methylene groups present in the alkyl chains and the methoxyl groups correspond to the bands from 2850 to 2960cm$^{-1}$. The broad absorption bound to 3440cm$^{-1}$ in the lignin sample is related to the elongation of the vibration of the hydroxyl groups.

Most of the peaks related to hydroxyl and acetate groups are observed in the FTIR spectrum of the PVA sample, as shown in Figure 1. The large band observed at 3350cm$^{-1}$ refers to the O-H elongation. The vibrational band observed at 2970cm$^{-1}$ refers to the C-H elongation of the alkyl groups and the peak at 1720cm$^{-1}$ is due to the C=O elongation in the carbonyl groups. C-H bond strain vibrations appeared in the region of 1427-1330cm-'. Peaks between 1300 and 1000cm$^{-1}$ can be assigned to ether groups (C-O) and acetal ring bands (C-O-C). Deformation bands close to 900-500cm$^{-1}$ were observed.

For the mixing samples, the chemical interactions between PVA and lignin are evidenced by the change of some peaks. The O-H stretch peak at 3350cm$^{-1}$ changes to a higher wavenumber as the lignin content is increased in the samples of mixtures. In the lignin sample this peak was assigned at 3440cm$^{-1}$. Possibly the strong hydrogen bonds between the OH groups of PVA and lignin caused these peak changes.

Samples with mass proportions of the polymer coating layer relative to urea of approximately 10, 15 and 25% were obtained by applying different amounts of polymer solutions to the urea granules. The dry mass of urea granules before and after the coating procedure was considered to calculate the mass percentage of the polymeric layer. The urea granules and polymer solutions were added to an Erlenmeyer flask that was kept in rotation for approximately 10 min. Thereafter, the dispersing agent was added to the mixture at a mass ratio of 1:10. Lignin powder was used as dispersing agent.

Table 2 presents the viscosity values of the polymeric solutions and the contact angles of their respective polymeric films.

| Polymeric solution | Viscosity (cP) | Contact Angle (°) |
|---|---|---|
| Lignin | 30.19±0.55 | 63.10±1.39 |
| PVA | 20.40±0.25 | 58.57± 0.67 |
| Blend 25L75P | 20.40±0.31 | 60.82±3.15 |
| Blend 50L50P | 22.40±0.22 | 61.57±0.43 |
| Blend 75L25P | 25.19±0.37 | 67.07±0.27 |

The PVA solution presented lower viscosity than the lignin solution, probably related to the molecular weight of both polymers. In addition, the polymeric film prepared from PVA presented the lowest contact angle, which confirms the lower hydrophobicity of this material in relation to the others. Increasing the lignin content in the PVA solution increased the viscosity and contact angle values.

The viscosities of the polymer solutions were measured using a viscometer (Brookfield, DV III - Ultra) with the Spindle SC4-34, at the highest rotational speed, which will provide a full-scale reading (200 rpm) and at room temperature (approximately 25°C). The prepared polymeric solutions were spread over plastic sheets and the contact angle of the prepared polymeric films was verified on a video-based optical contact angle measurement instrument (Dataphysics, model SCA20). First, the samples were air-dried at room temperature for 48 h. Water contact angle values were obtained by averaging at least 3 measurements.

The present invention also provides an encapsulated urea for use in soil correction comprising a core comprising an urea, and a capsule wall comprising lignin and PVA.

The capsule or encapsulated urea, objects of the present invention, may be used in application compositions. Application compositions comprising the capsule or encapsulated urea of the present invention may be commonly used in application to soils, crops or culture medium in general. Any environment requiring the prolonged release of a release substance and comprising a solvent substance. Usually, when applied to the soil, the available water in contact with the capsule initiates a process of release of the release substance into the medium.

The release tests were performed, the urea samples were placed in a nylon bag and immersed in distilled water at a concentration of 10 g of urea per 200 mL of water. The tests were performed at room temperature (approximately 25 °C) and without stirring. The containers were sealed with plastic film to prevent mass loss. Aliquots of 1.5 mL were collected at different times for analysis.

Nitrogen concentration was measured according to the spectroscopic method suggested by Bortoletto-Santos et al. (Bortoletto-Santos, R., Ribeiro, C., & Polito, W.L. (2016). Controlled release of nitrogen-source fertilizers by natural-oilbased poly(urethane) coatings: The kinetic aspects of urea release. Journal of Applied Polymer Science, 133(33).). Briefly, the methodology consists of the preparation of the Ehrlich reagent (5.0 g of 4-4'-dimethylaminobenzaldehyde and 20 mL of hydrochloric acid PA diluted with distilled water to 100 mL) and the 10% trichloroacetic acid solution. Then, 500 mL of the withdrawn sample was mixed with 2.5 mL of the trichloroacetic acid solution and 500 mL of the Ehrlich reagent. The absorbance of this prepared solution was measured at 435 nm (Shimadzu spectrophotometer, model 1240) and the nitrogen concentration was calculated based on a calibration curve. The calibration curve was obtained by following the same procedure described above but using known concentrations of urea.

The experimental nitrogen release data according to time were adjusted to the zero-order kinetic model (Equation 1), and the Korsmeyer-Peppas (Equation 2), Higuchi (Equation 3) and Peppas-Sahlin (Equation 4) models, as suggested by Sempeho et al. (2014) and Costa and Sousa Lobo (2001). The Peppas-Sahlin exponent was considered equal to 0.5 to represent diffusion in a film (Peppas and Sahlin, 1989). The nonlinear adjustment of the experimental data to the models presented was performed by the method of least squares.

$$Q = K_0 t \quad (1)$$

$$Q = K_{KP} t^n \quad (2)$$

$$Q = K_H t^{0,5} \quad (3)$$

$$Q = K_{PH1} t^{0,5} + K_{PH2} t \quad (4)$$

Where Q is the nitrogen release (%) at time t (h), $K_0$ is the zero-order release constant ($h^{-1}$), $K_{KP}$ is the Korsmeyer-Peppasrelease constant ($h^{-n}$), n is the Korsmeyer-Peppas release exponent (dimensionless), $K_H$ is the Higuchi release constant ($h^{-0,5}$), and $K_{PH1}$ ($h^{-0,5}$) and $K_{PH2}$ ($h^{-0,5}$) are the Peppas-Sahlin release constants.

Morphological investigations of the urea samples were performed by scanning electron microscopy (SEM, Carl Zeiss, model Evo MA10). For SEM images, samples were first covered with gold for 120s at 50 mA using a spray equipment (LEICA EM SCD050).

Figures 2-7 illustrate the outer surface of the produced samples. Figure 2 illustrates the outer surface of the uncoated urea granule as rough and porous due to the typical crystal structure of the urea.

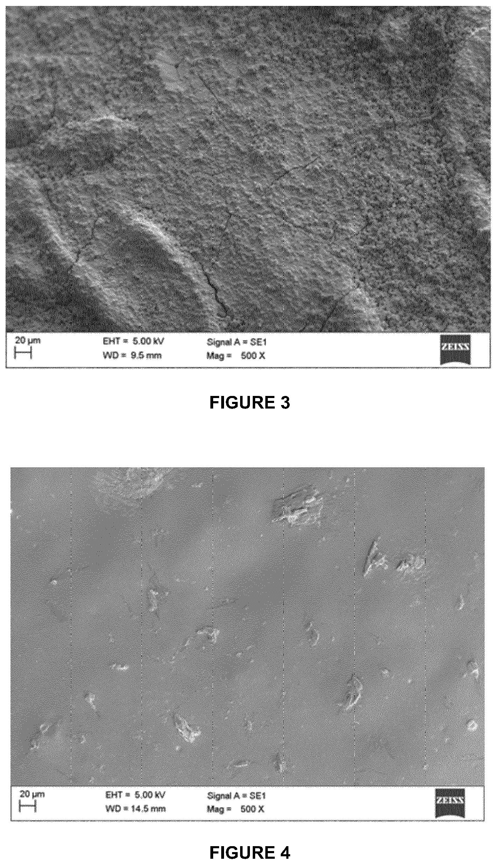

The lignin coating surface (Figure 3) is relatively rough with reliefs and cracks, probably related to some lignin aggregation.

Figure 4 illustrates the PVA coating, which has a smooth and dense external surface, and no cracks or holes were observed.

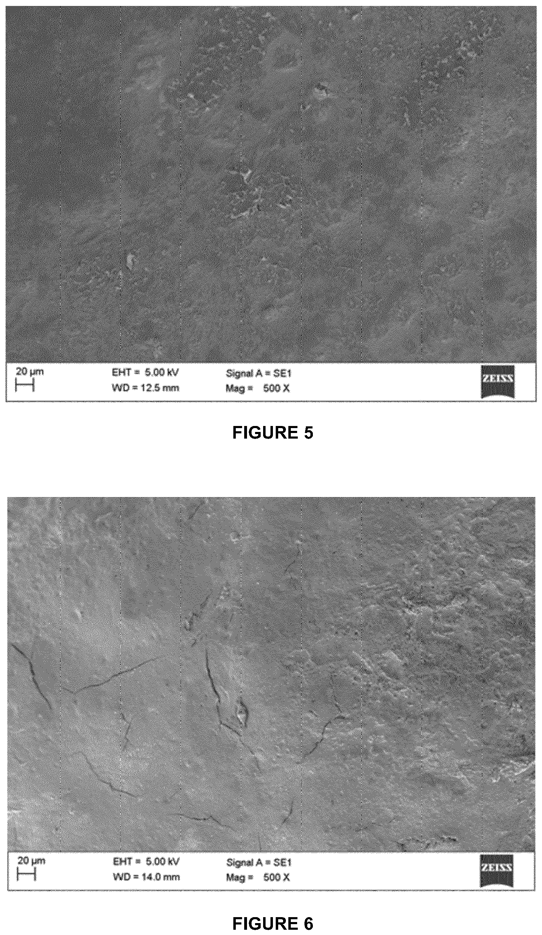

Figures 5-7 disclose coating surfaces of the PVA and lignin mixtures, which still proved smooth, and any aggregation was not observed, which indicates that the PVA and lignin molecules were homogeneously mixed. It is noted that the addition of lignin in the PVA increased crack formation on the coating surface. We observed that the film with 25% by mass of lignin is homogeneous, and the addition of 50% by mass of lignin already causes crack formations.

Still, in fact, the polymeric coating from 1 to 30%, preferably at 10% by mass allows the complete coating, resulting in a surface without discontinuities.

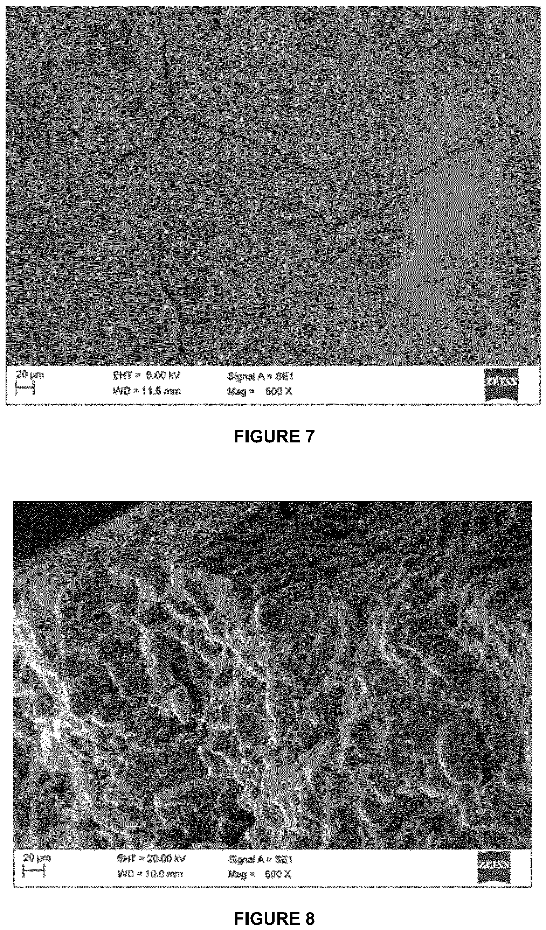

The figures 8-13 present scanning electron microscopy (SEM) images of the cross-section of urea granules coated with the different polymer solutions proposed at 25% by mass. Although different polymer concentrations resulted in different capsule wall thicknesses, the morphology of the capsule walls at all concentrations was quite similar.

The figure 8 illustrates cross-sectional SEM image of the uncoated urea granule showing that the granule is uniformly formed by elongated crystals.

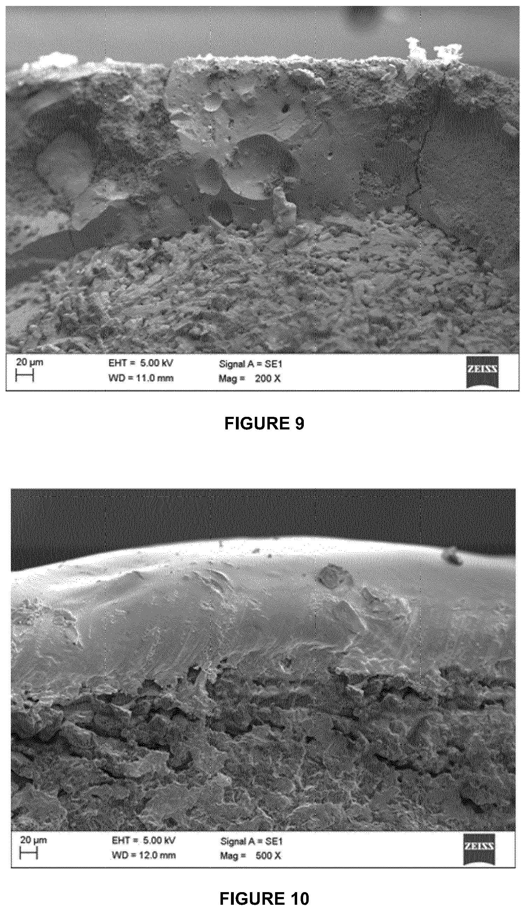

As can be seen in Figures 9-13, all polymeric solutions formed dense films on the urea granules. Some bubbles can be visualized in the films formed with lignin, which can be due to the presence of air in the polymeric solutions.

The figure 9 shows a crack in the lignin film, which extends through the thickness of the lignin film.

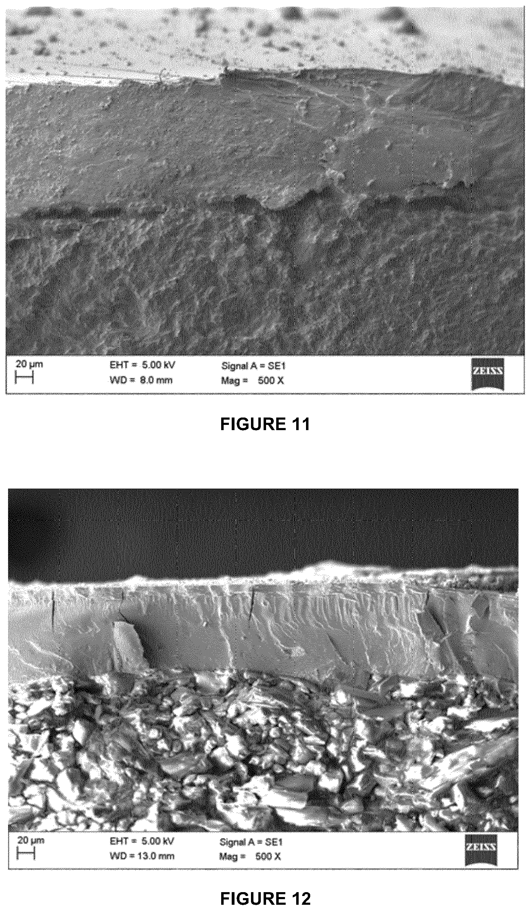

In Figure 12 it is observed that the crack in the film formed with the mixture of 50% by mass of lignin and 50% by mass of PVA (50L50P) does not cross the full extent of the polymeric film. Thus, nitrogen release from urea granules can be preserved if most cracks do not fully extend. Nitrogen release tests are in line with such configuration.

Accordingly, coating polymeric solutions in different proportions results in different thicknesses of polymeric layers, as shown in Table 3. These thicknesses were evaluated using Image J software on MEV images.

Table 3. Thicknesses of the polymeric layers in the urea granules for all proposed polymeric solutions in different mass proportions for urea granules.

| M* (% by mass) | Polymeric coating | | | | |
|---|---|---|---|---|---|
| | Lignin | PVA | Blend 25L75P | Blend 50L50P | Blend 75L25P |
| 10 | 49.4 ± 7.6 | 48.4 ± 4.8 | 52.7 ± 7.5 | 62.1 ± 4.6 | 48.9 ± 4.3 |
| 15 | 72.6 ± 8.0 | 75.0 ± 6.2 | 86.0 ± 8.1 | 85.6 ± 3.7 | 85.2 ±4.9 |
| 25 | 175.9 ± 13.9 | 156.5 ± 6.2 | 154.3 ± 5.5 | 148.5± 11.8 | 150.8 ± 6.5 |
| * Mass ratio of polymer solution in urea granules | | | | | |

All polymeric solutions have similar thicknesses at the same concentration due to the similarities of the viscosity values of these solutions. Considering the average of all polymeric solutions, the polymeric coatings at 10, 15 and 25% by mass resulted in polymeric films in the granules with thicknesses of $52.6 \pm 5.2$, $80.2 \pm 6.1$ and $158.9 \pm 10.6$ $\mu$m. Thus, the increase in polymer concentration from 10 to 15% by mass increased the film thickness by up to 1.7 times. The film thickness was increased by up to 2.4-fold when the mass ratio of polymer solution to urea granules was increased from 15 to 25%.

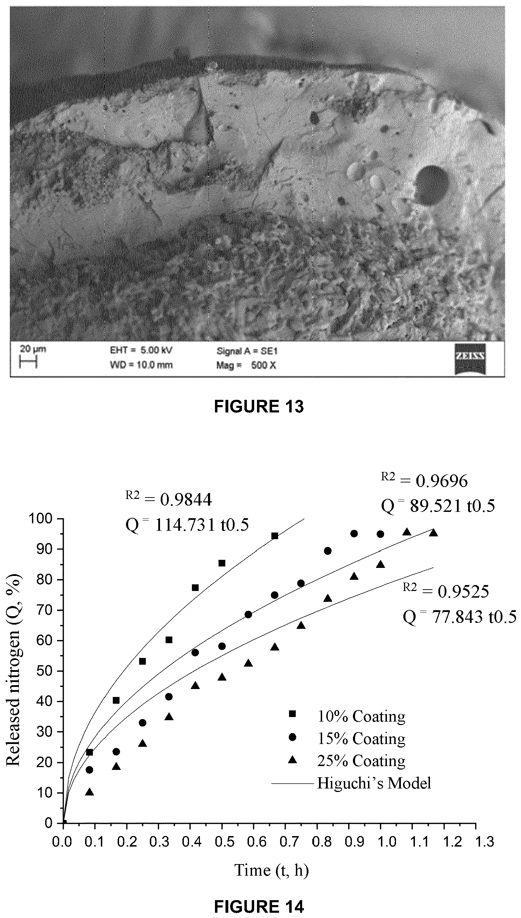

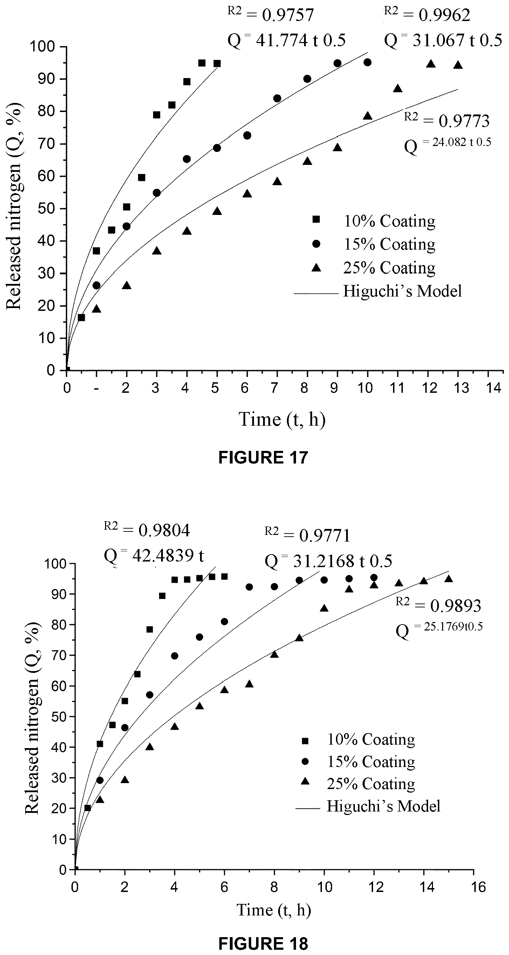

Urea samples coated by different polymers at different thicknesses were immersed in water to evaluate nitrogen release according to contact time. Experiments were performed until nitrogen release was close to 90%. The figures 14-20 present the experimental nitrogen release data and the adjusted curve according to the Higuchi's model (Equation 3) and displays the effect of different polymeric thicknesses on urea samples coated with (a) lignin, (b) PVA, (c) 20L80P mixture, (d) 25L75P mixture, (e) 30L70P mixture, (f) 50L50P mixture, and (g) 75L25P mixture. The adjusted parameters for all proposed models are presented in Table 4 for experimental nitrogen release data from urea with 10% of polymeric coating. All other polymeric thicknesses presented similar results for model adjustments.

Table 4. Parameters adjusted for the models to represent the release of nitrogen from the urea coated with different polymers with 10% of polymeric coating.

Table 4. Parameters adjusted for the models to represent nitrogen release from urea coated with different polymers.

| Model | Parameters | Polymer | | | | | | |
|---|---|---|---|---|---|---|---|---|
| | | Lignin | PVA | Blend 75L25P | Blend 50L50P | Blend 30L70P | Blend 25L75P | Blend 20L70P |
| Korsmeyer-Peppas | $R^2$ | 0.995 | 0.989 | 0.992 | 0.993 | 0.981 | 0.991 | 0.986 |
| | KKP | 130.1 | 47.40 | 59.39 | 40.82 | 40.48 | 33.62 | 30.70 |
| | n | 0.653 | 0.608 | 0.586 | 0.717 | 0.536 | 0.683 | 0.677 |
| Zero order | $R^2$ | 0.955 | 0.935 | 0.939 | 0.970 | 0.871 | 0.958 | 0.948 |
| | K0 | 165.9 | 32.52 | 45.39 | 31.03 | 20.43 | 22.24 | 19.04 |
| Higuchi | $R^2$ | 0.984 | 0.983 | 0.989 | 0.974 | 0.980 | 0.975 | 0.970 |
| | $K_H$ | 114.7 | 51.95 | 62.20 | 49.11 | 42.48 | 41.77 | 39.04 |
| Peppas-Sahlin | $R^2$ | 0.994 | 0.988 | 0.991 | 0.992 | 0.980 | 0.990 | 0.984 |
| | KPS1 | 76.27 | 40.20 | 51.48 | 26.01 | 40.67 | 25.01 | 24.11 |
| | KPS2 | 57.05 | 7.579 | 8.051 | 14.88 | 6.901 | 9.139 | 7.457 |

The results presented in Table 4 show that the Korsmeyer-Peppas and Peppas-Sahlin models represent very well the experimental data of nitrogen release from urea coated with all proposed polymers. Adjusting the experimental data in the zero-order kinetic model results in the lowest $R^2$ values. Parameter "n" in the Korsmeyer-Peppas model represents the type of transport mechanism for a given solute and values "n" tending to 1 characterize a zero-order kinetic process. As shown in Table 4, the values of "n" were less than 1 for all polymers, which indicates that the mass transfer followed a non-Fickian model. Related to the Peppas-Sahlin model, the terms $K_{PS1}$ and $K_{PS2}$ represent the Fickian and relaxational contributions. For all polymers, the term $K_{PS1}$ was higher than $K_{PS2}$, which indicates that Fickia diffusion is more prevalent than relaxational contributions since the polymers used did not present considerable swelling.

The decrease in the curvature parameter represents a decrease in nitrogen release. Table 5 shows the time required to release approximately 90% nitrogen from the urea granules coated with all proposed polymers.

Table 5. Time required to release approximately 90% of nitrogen into water from the urea granules coated with all proposed polymers.

| Polymer | Coating | | |
|---|---|---|---|
| | 10 % by mass | 15 % by mass | 25 % by mass |
| Lignin | 35 | 55 | 65 |
| PVA | 180 | 420 | 660 |
| Blend 20L80P | 270 | 540 | 720 |
| Blend 25L75P | 270 | 540 | 720 |
| Blend 30L70P | 210 | 420 | 600 |
| Blend 50L50P | 180 | 390 | 600 |
| Blend 75L25P | 120 | 300 | 410 |

As expected, increasing the thickness of the polymeric wall decreases the release of nitrogen into the liquid medium.

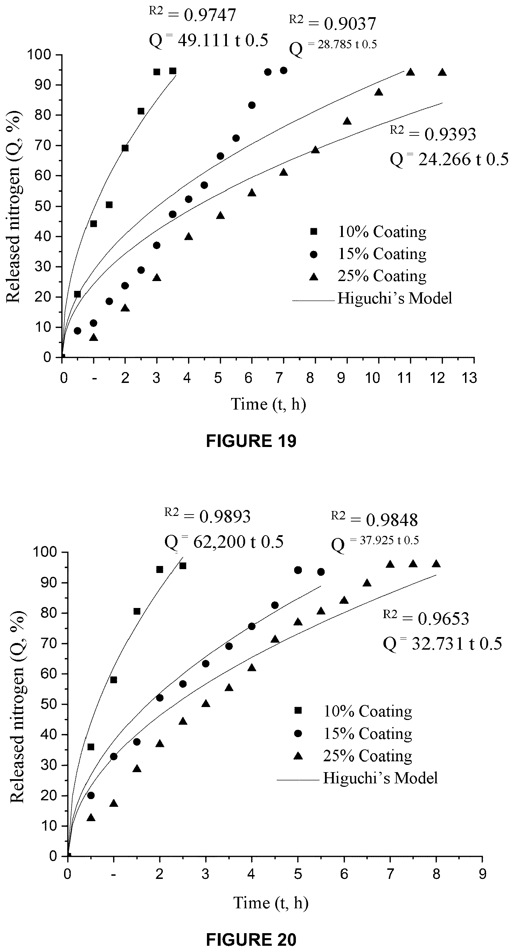

The increase in polymer concentration from 10 to 15 wt% causes a more pronounced decrease in nitrogen release to the urea coated with the 50L50P mixture. When the polymer concentration is increased from 10 to 15% by mass, the curvature of the nitrogen release data decreased by a factor of 1.7; from 49.1 to 28.7; for the urea coated with the 50L50P mixture (Figure 19).

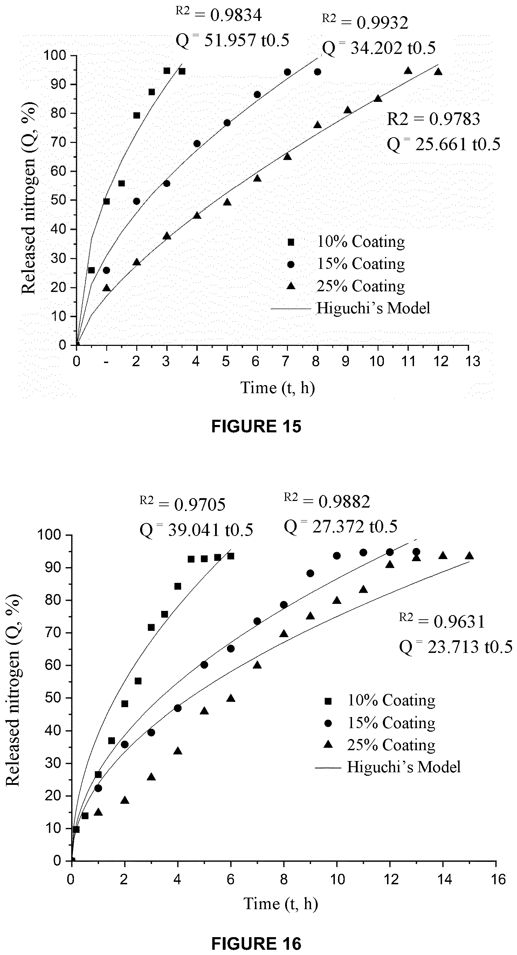

For all other polymers, the curvature of the nitrogen release data is reduced by a factor of at least 1.3 when the polymer concentration is increased from 10 to 15 wt%. The curvature of the nitrogen release data is decreased by a factor of less than 1.33 (for PVA coating, Figure 15) if the polymer concentration is increased from 15 to 25 wt%. The increase in polymer concentration from 10 to 15% by mass is more pronounced in decreasing of nitrogen release from the coated urea samples than from 15 to 25% by mass. This behavior may be associated with the fact that coating urea samples with 15 wt% of the proposed polymers is sufficient to control nitrogen release from the urea granules. Still, according to the SEM images, the polymeric films are dense, but several cracks were observed, which resulted in the diffusion of water in the urea granules. Thus, the thickness of the polymers is an important parameter in controlling the diffusion of water in the lignin and PVA coated urea granules, however, it is not the most prominent, as it has an effect on the weighted composition of the controlled release polymeric system, one of the objects of the present invention.

The time required to release approximately 90% of nitrogen from uncoated urea was 20 min. All proposed polymers improved the release time (Table 5).

The release time of 90% of the nitrogen present in the urea increased to up to 65 min when the urea was coated with lignin with coating of 25% by mass. Coating with PVA caused a more pronounced increase than lignin, reaching 660 min with a coating of 25% by mass. This behavior is due to the fact that the PVA film has a lower contact angle (Table 2) than the lignin film and, therefore, the PVA film is more hydrophilic than the lignin film. In addition, the PVA film showed denser morphology than that of lignin (Figures 3 and 4).

The present invention suggests mixing PVA with lignin to improve the characteristics of the formed film in terms of increasing the release time of one or more substances. The data presented in Table 5 show that blends with 20 to 30% of lignin increased the release time of the nitrogen present in the urea. The release time of the blend with 50% of lignin was similar to that of PVA. Therefore, it should be noted that in an unprecedented and surprising way the blends formed with lignin and PVA with up to 30% by mass of lignin presented nitrogen release times higher than PVA and lignin.

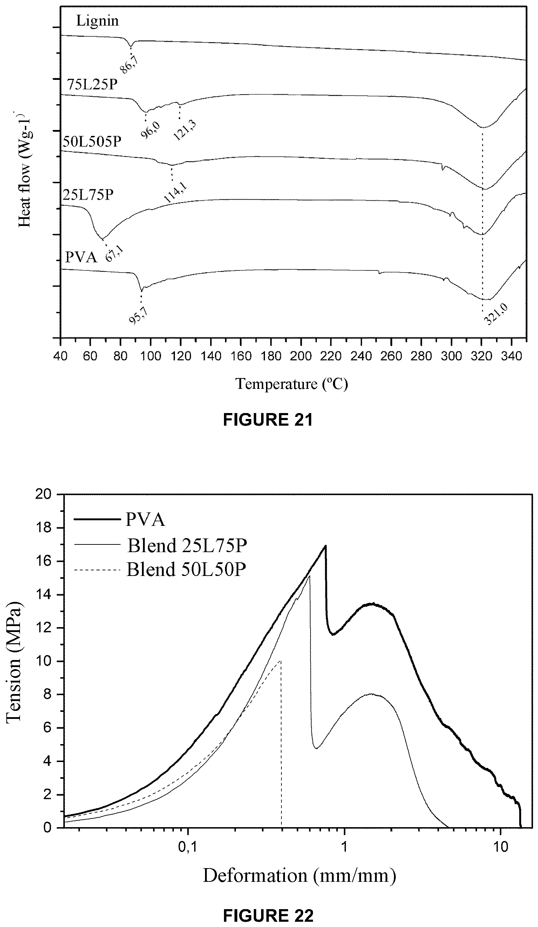

In order to better characterize the positive behavior of the lignin mixtures with PVA, Figure 21 presents a characterization of the polymers and blends by exploratory differential calorimetry (DSC).

The DSC patterns in Figure 21 show endothermic peaks of glass transition temperature (Tg) and melting temperature (*Tf*). The glass transition temperature of polymeric mixtures is a typical characteristic that is used in the study of miscibility and interaction between polymers. Melting temperature is mainly used in the investigation of polymer crystallization. PVA and blends (25L75P and 50L50P) presented two main characteristic endothermic peaks, one related to the glass transition temperature and the other related to the melting temperature.

PVA had a glass transition temperature of 95.7 °C, while blends 25L75P and 50L50P obtained values for *Tg* of 67.1 and 114.1 °C, respectively. In addition, the 75L25P blend had two main Tg-related peaks being located at 96.0 and 121.3 °C.

For lignin, the glass transition temperature was 86.7 °C.

It is noted that the 25L75P blend has a lower glass transition temperature than those of the materials, and the lignin plasticization process is evidenced by mixing 25% by mass of the same with the PVA, with an improvement in the mechanical behavior of this material. For blends with 50 and 75% of lignin, the glass transition (Tg) is greater than that of PVA and lignin, which shows a greater fragility of these blends. Thus, the addition of 25% of lignin in PVA is shown to have better mechanical characteristics for the polymeric film. This behavior corroborates the results of increased release time presented in Table 5.

The non-linear mechanical behavior of PVA films and PVA mixtures with lignin (25L75P and 50L50P) was characterized by the tensile tests performed at room temperature. Tensile strength versus strain curves are shown in Figure 22. In addition, the values of the maximum stress ($\sigma$max) and the modulus of elasticity (E) in relation to the strain rate for the polymeric films produced are arranged in Table 6.

Table 6 - Maximum stress and modulus of elasticity of polymeric films.

| Sample | $\sigma$max (MPa) | E (MPa) |
|---|---|---|
| PVA | 16.92 ± 3.1 | 1832.70 ± 155.22 |
| Blend 25L75P | 15.14 ± 2.4 | 1292.59 ± 105.35 |
| Blend 50L50P | 10.08 ± 2.3 | 1229.61 ± 122.12 |

All solid materials can be deformed when subjected to external loads. When a deformed body is able to recover its original dimensions when the load is removed, its behavior is said to be elastic, being the region prior to the maximum stress suffered by the material called the elastic region. From the limit load the material no longer behaves elastically, then reaching the elastic limit. Thus, the deformations suffered after the maximum stress value are called plastic deformation, and this region is known as the plastic region.

The stress versus strain curve for PVA showed that it has an essentially ductile and resistant behavior. The films formed with the mixture of lignin and PVA presented maximum stress values lower than the PVA film, in addition to the decrease in the elasticity parameter. Thus, for the same stress value, it was evidenced that the 25L75P blend presented a greater resistance to deformation in relation to the PVA. Materials considered plasticizers reduce the modulus of elasticity, as they weaken the bond that holds the polymer molecules together and, thus, the material becomes less rigid presenting a higher elasticity. In addition, the insertion of lignin in the PVA composition increased the elasticity of the materials, but the 50L50P blend behaved as a rigid material, not showing the plastic region of the material as shown in Figure 22.

Applying the polymeric controlled release system, or capsule of the present invention, to the culture medium comprises applying to a soil, a bed, pots, planting, rumen, by-pass protein protection for animal nutrition, controlled release of urea to ruminants, biocide capsules, etc.

The present invention also provides a polymeric material for release of a release compound comprising a polymeric matrix material comprising at least 50% by mass of the combination of lignin and PVA; and one or more release substances within the polymeric matrix; wherein the polymeric matrix material is a polymeric material having hydrophobic characteristics and a release substance(s) incorporated into the polymeric matrix is a hydrophilic material.

In particular, the polymeric matrix material forms the capsule wall and is composed of the combination of lignin and PVA. Such combination comprises at least 50% of the capsule wall. In this manner, other compounds may be present without affecting the release performance of the capsule wall, such as inclusions, additive materials, or eventual process impurities.

Since the purpose of the capsule wall is to encapsulate at least partially a release substance(s) incorporated into the polymeric matrix by virtue of protecting it from water, it is understood that this is a preferably hydrophobic material. Even more preferably, the use of such protection is for hydrophilic release substances.

The use further provides the soil repairing agent comprising the capsule of the present invention, wherein the capsule wall comprises lignin and PVA and the interior of the capsule comprises one or more release substances. The application of the capsule to the culture medium, preferably a soil, provides controlled release of the release substance which can provide soil correction as desired. As known by the art, the immediate release of release substances is much lower than the controlled release, which provides greater use of release substances and avoids waste and overdoses. In this sense, the release time can be controlled according to the mass of the wall in mass percentage of the total composition, as well as the ratio between the lignin and the PVA. For example, as shown in Table 5, the increase in the proportion of PVA in the blend leads to a longer release time, while the increase in the thickness of the capsule wall (and consequent increase in its mass ratio in the capsule) also leads to a longer release time, with an increase in the curvature parameter of the release curve.

Taking Figure 5 as an example, it is possible to identify the surface of the capsule of the invention free of cracks. Furthermore, Figures 6 and 7 illustrate the progressive appearance of cracks. Without being bound by theory, the inventors believe that the cracks present in the capsules provide water penetration into the capsule wall, without reaching the release material and reaching the release material, providing a cause-and-effect relationship between the blend composition and crack creation, which is evidenced in Table 5, providing a modulation in the release curve (Figures 14 to 20). Such modulation is constituted by a polymeric controlled release system of a release substance in a medium. In the polymeric controlled release system, the release effect is controlled by (i) the thickness of the formed wall; (ii) the composition of the wall, which are determined according to the medium, thus providing a method of controlled release and controlled release of the release substance, as the capsule walls can thus maintain certain integrity without the immediate solvency of the release substance, providing the release according to exposure to the medium. In this way, the present composition provides the ideal balance between the retention of the release substance and its exposure to the medium and the release process, when once started, is progressive and with good distribution over time.

Additionally, the polymeric controlled release system of the present invention provides for the constitution of multilayers of different blending compositions. For example, a first layer with 28% of lignin and 72% of PVA and a second layer with 10% of lignin and 90% of PVA could be used, depending on the dynamics of the application medium or culture. For example, in an application that is predicted to have heavy rainfall, one could have a combination of two or more layers that would resist initial wear for longer and produce the fastest release when the culture medium was already less wet.

In this manner, the polymeric controlled release system provides a method of controlled release of a release substance in a culture medium comprising modulating between 20-50% of lignin and 50-80% of PVA in a capsule wall and an average thickness of at least 50 $\mu$m.

Finally, the application of the polymeric solution, object of the present invention, to particularized surfaces or objects can provide their exposure, or release, over time. As an example, the application of the polymeric solution to a hydrophilic material may provide its containment for a certain period which, in the end, upon gaining water penetration, will initiate a process of exposure of the contained material, which will be released. In this sense, it is not necessary to form the capsule itself, but the seal provided by a film produced by the polymer solution, when cured, will form such a seal. Such polymeric solution, and film, become an extended-release wall, which in the present invention comprises lignin and PVA, and the release of the release substance, or even exposure of the surface under the wall, is promoted by water contact in the extended release wall.

**Claims**

1. RELEASE CAPSULE comprising a capsule interior and a capsule wall encapsulating the interior, the capsule interior comprising a compound containing one or more release substances; **wherein** the capsule wall comprises:

   **a)** 20-50% of lignin;
   **b)** 50-80% of PVA.

2. RELEASE CAPSULE of claim 1, **wherein** the lignin is preferably present from 20-25%.

3. RELEASE CAPSULE of claim 1, **wherein** the PVA is preferably present from 75-80%.

4. CAPSULE of claim 1, **wherein** the capsule presents an average thickness of at least 50 $\mu$m.

5. RELEASE CAPSULE of claim 1, **wherein** the release capsule presents a mass ratio of 1 to 30%, preferably of 10-25% of capsule wall, after curing.

6. RELEASE CAPSULE of claim 1, **wherein** the compound containing the release substance(s) is a fertilizer.

7. RELEASE CAPSULE of the preceding claim, **wherein** the compound containing the release substance(s) is one or more of nitrogen, phosphate, potassium, organic or organomineral fertilizers.

8. RELEASE CAPSULE of claim 1, **wherein** the compound containing the release substance(s) is a urea.

9. POLYMERIC SOLUTION for use in release capsules comprising, by total mass of the mixture:

(a) 20-50% (in mass basis) of lignin;
(b) 50-80% (in mass basis) of a PVA; and
(c) a diluent agent; wherein the diluent agent is in a ratio of 1:5 to 1:15 of components (a) and (b).

10. METHOD OF PRODUCING CAPSULES **comprising:**

(a) providing 20-50% of lignin and 50-80% of PVA by total mass of the mixture;
(b) mixing the lignin and PVA, obtaining a polymeric mixture;
(c) adding and mixing a diluent agent to the polymeric mixture, in the mass ratio of 1:5 to 1:15, providing a polymeric solution;
(d) adding and mixing at least one release substance to the polymeric solution obtaining an encapsulating mixture comprising a mass ratio of at least 10% in mass basis of polymeric solution to the compound containing one or more release substances;
(e) adding a dispersant to the encapsulating mixture in the mass ratio of 1:5 to 1:15, obtaining capsules comprising a capsule core and capsule wall formed by the combination of lignin and PVA, and
(f) curing the encapsulating mixture to obtain a capsule.

11. METHOD OF PRODUCING CAPSULES of claim 10, **wherein** step (a) provides 20-25% of lignin and 75-80% of a PVA, by total mass of the mixture.

12. METHOD OF PRODUCING CAPSULES of claim 10, **wherein** step (c) adds and mixes a diluent agent to the polymeric mixture, in the mass ratio of 1:5 to 1:15, providing a polymeric solution.

13. METHOD OF PRODUCING CAPSULES of claim 10, **wherein** step (d) adds and mixes a compound containing one or more release substances to the polymeric solution obtaining an encapsulating mixture comprising a mass ratio of at least 10% of polymeric solution to the release substance.

14. METHOD OF PRODUCING CAPSULES of claim 10, **wherein** step (e) adds a dispersant to the encapsulating mixture in the mass ratio of 1:5 to 1:15, obtaining capsules comprising a capsule core and capsule wall formed by the combination of lignin and PVA.

15. METHOD OF PRODUCING CAPSULES of claim 10, **wherein** the dispersant is lignin.

16. METHOD OF PRODUCING CAPSULES of claim 10, **wherein** the diluent agent is methanol, dimethyl sulfoxide (DMSO), acetamide, glycols, and dimethylformamide (DMF).

17. METHOD OF PRODUCING CAPSULES of claim 10, **wherein** the dissolving agent may be methanol.

18. ENCAPSULATED UREA FOR USE IN SOIL CORRECTION **comprising:**

- a core comprising an urea, and
- a capsule wall comprising lignin and a PVA.

19. POLYMERIC MATERIAL FOR RELEASE OF A RELEASE COMPOUND, **comprising:**

- a polymeric matrix material comprising greater than 50% of the combination of lignin and PVA; and
- compound containing one or more release substances incorporated into the polymer matrix;

wherein:

• the polymeric matrix material is a polymeric material with hydrophobic characteristics and
• a compound containing one or more release substances incorporated into the polymer matrix is a hydrophilic material.

20. POLYMERIC CONTROLLED RELEASE SYSTEM containing one or more release substances in a medium **comprising** a polymeric matrix comprising:

**a)** 20-50% of lignin;

**b)** 50-80% of PVA;

**c)** other polymers that can replace PVA.

21. METHOD OF CONTROLLED RELEASE of compound containing one or more release substances in a culture medium **comprising** modulating between 20-50% of lignin and 50-80% of PVA in a capsule wall and an average thickness of at least 50 μm.

22. APPLICATION COMPOSITION **comprising** the capsule of claim 1.

23. SOIL REPAIRING AGENT **comprising** the capsule of claim 1, wherein the capsule wall comprises lignin and a PVA and the capsule interior comprises one or more release substances.

**FIGURE 1**

**FIGURE 2**

FIGURE 3

FIGURE 4

20 µm    EHT = 5.00 kV    Signal A = SE1
WD = 12.5 mm    Mag = 500 X    ZEISS

**FIGURE 5**

20 µm    EHT = 5.00 kV    Signal A = SE1
WD = 14.0 mm    Mag = 500 X    ZEISS

**FIGURE 6**

**FIGURE 7**

**FIGURE 8**

FIGURE 9

FIGURE 10

**FIGURE 11**

**FIGURE 12**

**FIGURE 13**

**FIGURE 14**

$R^2 = 0.9834$
$Q = 51.957\, t^{0.5}$

$R^2 = 0.9932$
$Q = 34.202\, t^{0.5}$

$R^2 = 0.9783$
$Q = 25.661\, t^{0.5}$

Released nitrogen (Q, %) vs Time (t, h)

■ 10% Coating
● 15% Coating
▲ 25% Coating
—— Higuchi's Model

**FIGURE 15**

$R^2 = 0.9705$
$Q = 39.041\, t^{0.5}$

$R^2 = 0.9882$
$Q = 27.372\, t^{0.5}$

$R^2 = 0.9631$
$Q = 23.713\, t^{0.5}$

Released nitrogen (Q, %) vs Time (t, h)

■ 10% Coating
● 15% Coating
▲ 25% Coating
—— Higuchi's Model

**FIGURE 16**

$R2 = 0.9757$

$Q = 41.774 \, t \, 0.5$

$R2 = 0.9962$

$Q = 31.067 \, t \, 0.5$

$R2 = 0.9773$

$Q = 24.082 \, t \, 0.5$

- ■ 10% Coating
- ● 15% Coating
- ▲ 25% Coating
- —— Higuchi's Model

**FIGURE 17**

$R2 = 0.9804$

$Q = 42.4839 \, t$

$R2 = 0.9771$

$Q = 31.2168 \, t \, 0.5$

$R2 = 0.9893$

$Q = 25.1769 t 0.5$

- ■ 10% Coating
- ● 15% Coating
- ▲ 25% Coating
- —— Higuchi's Model

**FIGURE 18**

$R2 = 0.9747$
$Q = 49.111 \, t \, 0.5$

$R2 = 0.9037$
$Q = 28.785 \, t \, 0.5$

$R2 = 0.9393$
$Q = 24.266 \, t \, 0.5$

■ 10% Coating
● 15% Coating
▲ 25% Coating
—— Higuchi's Model

Released nitrogen (Q, %)

Time (t, h)

**FIGURE 19**

$R2 = 0.9893$
$Q = 62,200 \, t \, 0.5$

$R2 = 0.9848$
$Q = 37.925 \, t \, 0.5$

$R2 = 0.9653$
$Q = 32.731 \, t \, 0.5$

■ 10% Coating
● 15% Coating
▲ 25% Coating
—— Higuchi's Model

Released nitrogen (Q, %)

Time (t, h)

**FIGURE 20**

**FIGURE 21**

**FIGURE 22**

## INTERNATIONAL SEARCH REPORT

| | International application No. |
|---|---|
| | **PCT/BR2021/050528** |

| A. | CLASSIFICATION OF SUBJECT MATTER |
|---|---|

**IPC: C05G 5/35, C05G 5/12, C08L 97/00, C08L 29/00**
**CPC: C05G 5/35, C05G 5/12, C05G 5/37, C08L 97/00, C08L 97/005, C08L 29/00**
According to International Patent Classification (IPC) or to both national classification and IPC

| B. | FIELDS SEARCHED |
|---|---|

Minimum documentation searched (classification system followed by classification symbols)

**IPC: C05G 5/35, C05G 5/12, C08L 97/00, C08L 29/00**

Documentation searched other than minimum documentation to the extent that such documents are included in the fields searched

**Banco de Patentes Brasileiro INPI-Br**

Electronic data base consulted during the international search (name of data base and, where practicable, search terms used)

**Derwent Innovation**

| C. | DOCUMENTS CONSIDERED TO BE RELEVANT | |
|---|---|---|
| Category* | Citation of document, with indication, where appropriate, of the relevant passages | Relevant to claim No. |
| X | SANTOS, Antônio Carlos Silva dos. Revestimento de ureia com materiais poliméricos para produção de fertilizantes de liberação controlada. 12 July 2019. Dissertação (Mestrado em Engenharia Química) - Universidade Federal de Uberlândia, Uberlândia, 2019. DOI http://dx.doi.org/10.14393/ufu.di.2019.2181 (Abstract, pages 1-4, pages 5-25, pages 27-28, pages 30, 35, pages 44-45, 53-55, 59-77, 81-83) | 1 to 23 |
| A | EP 0918045 AI ( MATSUSHITA MITSUHIRO [JP]) 26 May 1999 (1999-05-26) (the whole document) | 1 to 23 |
| A | CN 109476561 A (BASF SE) 15 March 2019 (2019-03-15) (the whole document) | 1 to 23 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 March 2022 | 22 March 2022 |

| Name and mailing address of the ISA/ | Authorized officer |
|---|---|
| BR | |
| Facsimile No. | Telephone No. |

Form PCT/ISA/210 (second sheet) (January 2015)

INTERNATIONAL SEARCH REPORT
Information on patent family members

International application No.

**PCT/BR2021/050528**

| EP 0918045 A1 | 1999-05-26 | AU 1673697 A | 1997-09-10 |
|---|---|---|---|
| | | JP H10182264 A | 1998-07-07 |
| | | WO 9730952 A1 | 1997-08-28 |
| ------------------------------ | ---------------- | ------------------------------ | ---------------- |
| CN 109476561 A | 2019-03-15 | AR 108517 A1 | 2018-08-29 |
| | | AU 2017267129 A1 | 2018-11-22 |
| | | BR 112018073298 A2 | 2019-02-19 |
| | | CA 3024100 A1 | 2017-11-23 |
| | | CL 2018003267 A1 | 2019-01-04 |
| | | EP 3458433 A1 | 2019-03-27 |
| | | JP 2019520293 A | 2019-07-18 |
| | | MX 2018014176 A | 2019-02-28 |
| | | RU 2018143590 A | 2020-06-18 |
| | | US 2019276376 A1 | 2019-09-12 |
| | | WO 2017198588 A1 | 2017-11-23 |
| | | ZA 201808345 B | 2020-02-26 |
| ------------------------------ | ---------------- | ------------------------------ | ---------------- |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LI, JIEBING et al.** Structural functionalization of industrial softwood kraft lignin for simple dip-coating of urea as highly efficient nitrogen fertilizer. *Industrial crops and products,* 2017, vol. 109, 255-265
- **MULDER, W. J. et al.** Lignin based controlled release coatings. *Industrial Crops and Products,* 2011, vol. 34 (1), 915-920

- **BORTOLETTO-SANTOS, R. ; RIBEIRO, C. ; POLITO, W.L.** Controlled release of nitrogen-source fertilizers by natural-oilbased poly(urethane) coatings: The kinetic aspects of urea release. *Journal of Applied Polymer Science,* 2016, vol. 133 (33